Europäisches Patentamt

(19) European Patent Office

Office européen des brevets

(11) Publication number: **0 265 291**
**A2**

## (12) EUROPEAN PATENT APPLICATION

(21) Application number: 87309431.2

(22) Date of filing: 26.10.87

(51) Int. Cl.⁴: **G 01 B 5/02**

(30) Priority: 24.10.86 GB 8625480

(43) Date of publication of application:
27.04.88 Bulletin 88/17

(84) Designated Contracting States:
AT BE CH DE ES FR GB IT LI NL

(71) Applicant: **Thomas, John Meirion**
**32 Shrewsbury Avenue**
**East Sheen London, SW14 8JZ (GB)**

(72) Inventor: **Thomas, John Meirion**
**32 Shrewsbury Avenue**
**East Sheen London, SW14 8JZ (GB)**

(74) Representative: **Jenkins, Peter David et al**
**Page White & Farrer 5 Plough Place New Fetter Lane**
**London EC4A 1HY (GB)**

(54) **Length measuring device.**

㊿ A length measuring device comprising a base plate, an elongate flexible measuring strip which is hingedly attached to an edge of the base plate so that the base plate can be disposed at an end of an article whose length is to be measured and at an angle with respect to the attached portion of the measuring strip, and a sleeve which is slidably mounted on the measuring strip, so that the sleeve can be slid along the measuring strip and disposed against another end of the article, the sleeve being employed to bend the flexible measuring strip so that the sleeve is disposed at an angle with respect to the adjacent portion of that part of the measuring strip which is between the base plate and the sleeve.

Figure 1

# Description

## LENGTH MEASURING DEVICE

The present invention relates to a length measuring device and in particular to such a device which is adapted to measure the height of a user.

It is known for children to measure their height by adhering an elongate paper scale to a wall, standing against the paper scale and then attempting to read off their height by estimating, either by using their hand or a flat object such as a book, the position of the top of their head in relation to the scale. Such a known scale is difficult for a child to use and tends to give inaccurate measurements. In addition, the known scale is not readily portable and re-usable in a variety of places over a period of time.

The present invention aims to overcome these specified disadvantages of the known paper scale.

Accordingly, the present invention provides a length measuring device comprising a base plate, an elongate flexible measuring strip which is hingedly attached to an edge of the base plate and a sleeve which is slidably mounted on the measuring strip.

The present invention further provides a length measuring device comprising a base plate, an elongate flexible measuring strip which is hingedly attached to an edge of the base plate so that the base plate can be disposed at an end of an article whose length is to be measured and at an angle with respect to the attached portion of the measuring strip, and a sleeve which is slidably mounted on the measuring strip, so that the sleeve can be slid along the measuring strip and disposed against another end of the article, the sleeve being employed to bend the flexible measuring strip so that the sleeve is disposed at an angle with respect to the adjacent portion of that part of the measuring strip which is between the base plate and the sleeve.

Preferably, a face of the measuring strip has a printed scale extending longitundinally therealong, with the origin of the scale coinciding with the edge of the base plate.

The length measuring device may further comprise a bracket which is attached to the sleeve and has a free edge which is at right-angles to the sleeve, whereby when the sleeve is at right-angles to that portion of the measuring strip which is between the base plate and the sleeve the said free edge of the bracket is parallelly aligned with the said portion of the measuring strip.

Preferably, the bracket is in the form of a right-angled triangle having two edges which form the right angle, one of the said two edges being the said free edge and the other of the said two edges being attached to the sleeve.

In a particularly preferred arrangement the base plate comprises a first portion which is at an end of the device and a second portion which is between the first portion and the measuring strip, the first and second portions being foldable together thereby to store the measuring strip and sleeve therebetween, the first portion of the base plate, in use, being disposed adjacent the end of the article whose length is to be measured.

Optionally, the first portion of the base plate has hingedly attached thereto two opposed wing portions which can be folded over the first and second portions of the base plate thereby to form a folder for storing the strip and the sleeve.

Advantageously, one of the wing portions has a booklet attached thereto.

Embodiments of the present invention will now be described by way of example only, with reference to the accompanying drawings, in which:-

Figure 1 is a plan view of a length measuring device in accordance with a first embodiment of the present invention;

Figure 2 is a side view of the length measuring device of Figure 1 when being used to measure a vertical length; and

Figure 3 is a side view of a modification of the sleeve of the device of Figures 1 and 2 in accordance with a second embodiment of the present invention;

Figure 4 is a plan view of a length measuring device in accordance with a third embodiment of the present invention;

Figure 5 is a side view of the length measuring device of Figure 4 when being used to measure a vertical length;

Figure 6 is a plan view of a length measuring device in accordance with a fourth embodiment of the present invention, the device being in a folded configuration;

Figure 7 is a plan view of the length measuring device of Figure 6 in a partly-unfolded configuration; and

Figure 8 is a side view of the length measuring device of Figure 7 when being used to measure a horizontal length.

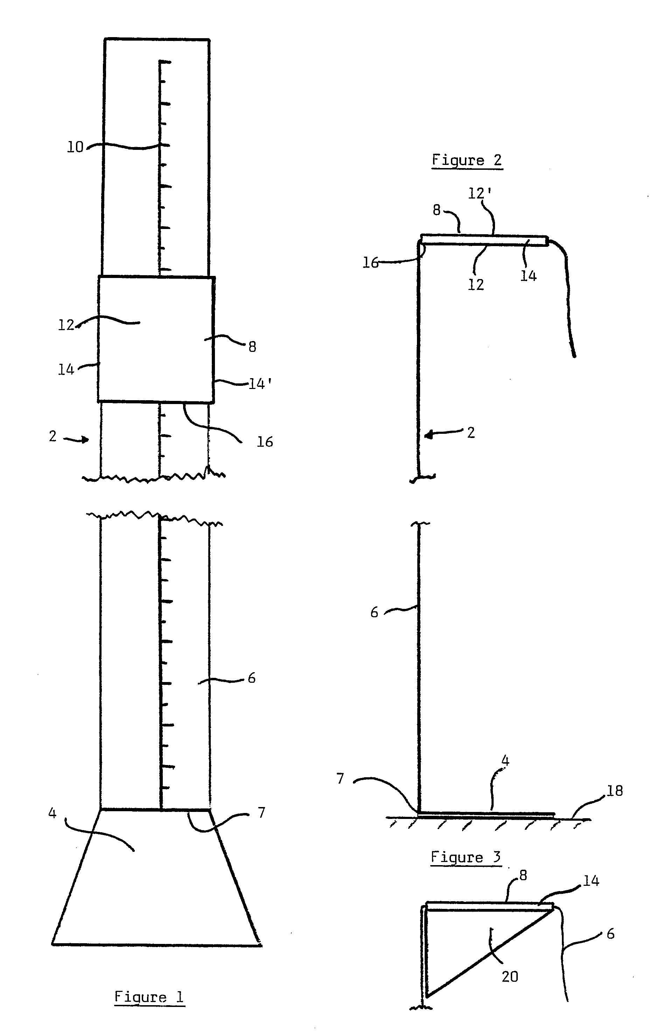

Referring to Figure 1, a length measuring device 2 comprises a base plate 4, an elongate flexible measuring strip 6 which is hingedly attached to an edge 7 of the base plate 4 and a sleeve 8 which is slidably mounted on the measuring strip 6. A front face of the measuring strip 6 has a printed scale 10 extending longitudinally therealong, with the origin of the scale 10 coinciding with the edge 7 of the base plate 4. Although, for the sake of simplicity, the illustrated arrangement shows only one printed scale it will be readily apparent that the device can be provided with any appropriate number of scales in any desired units of measurement. Typically, the printed scale 10 consists of both Imperial and Metric scales. The sleeve 8 consists of a strip of paper or card which is folded over itself twice aand adhered. Preferably the strip is adhered along the upper transverse edge as this is relatively simple to achieve and also as this arrangement permits the sleeve 8 to be slid easily along the measuring strip 6 without catching on the measuring strip 6. The sleeve 8 has front and rear rectangular faces 12, 12' which are slightly wider than the measuring strip 6, and two folded longitudinal edges 14, 14'. The sleeve 8 is preferably a relatively tight fit around the measuring

**0 265 291**

strip 6 so that the sleeve 8 cannot slide along the measuring strip 6 solely under the action of gravity but needs to be pushed manually along the measuring strip 6. That transverse edge 16 of the sleeve 8 which extends across the front face of the measuring strip 6, and is near to the base plate 4, crosses the printed scale 10 and the point of intersection on the printed scale 10 indicates the distance of the sleeve 8 from the base plate 4. A further advantage of having a relatively tight fit between the sleeve 8 and the measuring strip 6 is that this ensures that the transverse edge 16 is maintained at right-angles to the length of the measuring strip 6 thereby to ensure that accurate readings can be obtained.

The measuring strip 6 is made from a material which is sufficiently flexible that it can be bent a large number of times over large angles without any danger of the material tearing or being otherwise deformed. Also, the material is non-stretchable. A particularly suitable material for the measuring strip is made by Du Pont and is sold in the U.K. under the name Tyvek (Registered Trade Mark). An alternative material is synteape (Registered Trade Mark) sold by Wiggins Teape Limited. However, the measuring strip 6 may alternatively be made of a strong paper, cloth or plastics material. The base plate 4 and the sleeve 8 may be made of any laminar material, cardboard being particularly preferred.

Figure 2 shows how the length measuring device 2 of Figure 1 is used to measure a length. The length measuring device 2 has particular application in the measurement of the height of babies, children or adults, although it will be apparent that the length measuring device 2 could also be used in industrial or DIY applications by selecting appropriate dimensions and materials for the device. It can also be used in clinical and medical applications for measuring the height of patients.

In order to measure his height, a user places the base plate 4 on the ground 18 and then stands on the base plate 4. The measuring strip 6 is held upright with the printed scale 10 facing the user. The sleeve 8 is slid up or down the measuring strip 6 and is held horizontally on the top of the user's head. When the measuring strip 6 is taut and vertical and the sleeve 8 is horizontal, the transverse edge 16 of the sleeve 8 indicates on the printed scale 10 the height of the user and the user can easily read off his measured height on the printed scale 10. The user can check that the sleeve 8 is horizontal by performing the measuring operation in front of a mirror. If desired, the user can also mark a line on the measuring strip corresponding to his height by sliding a pen along the transverse edge 16 of the sleeve 8 and in this way he can make a permanent record of his height. The user can also enter the date adjacent the line.

Figure 3 shows the sleeve 8 of a second embodiment of the present invention. In this embodiment, in which the base plate 4 and measuring strip 6 are the same as in the first embodiment, in order to facilitate the attainment of a correct reading, one of the longitudinal edges 14 of the sleeve 8 has attached thereto a bracket 20 which is in the form of a right-angled triangle and can extend perpendicular to the plane of the sleeve. One of the edges forming the right-angle is disposed along the said longitudinal edge 14 so that during the measurement operation as described hereinabove the user can ensure that the sleeve is horizontal by aligning the other edge of the triangle which forms the right-angle with the front face of the vertically oriented measuring strip 6. Preferably, the bracket 20 is made of cardboard and is hingedly attached to the longitudinal edge 14 of the sleeve 8 at the said one edge which forms the right-angle of the triangle.

In a further preferred arrangement, an upwardly tapered piece of card is attached to the upper end of the measuring strip. The tapered piece of card neatly finishes off the end of the measuring strip and the tapering permits the measuring strip easily to be threaded through the sleeve. The flexible measuring strip can be wound around the piece of card for storage and transport of the length measuring device. Furthermore, the piece of card can be printed with appropriate information relating to the length measuring device.

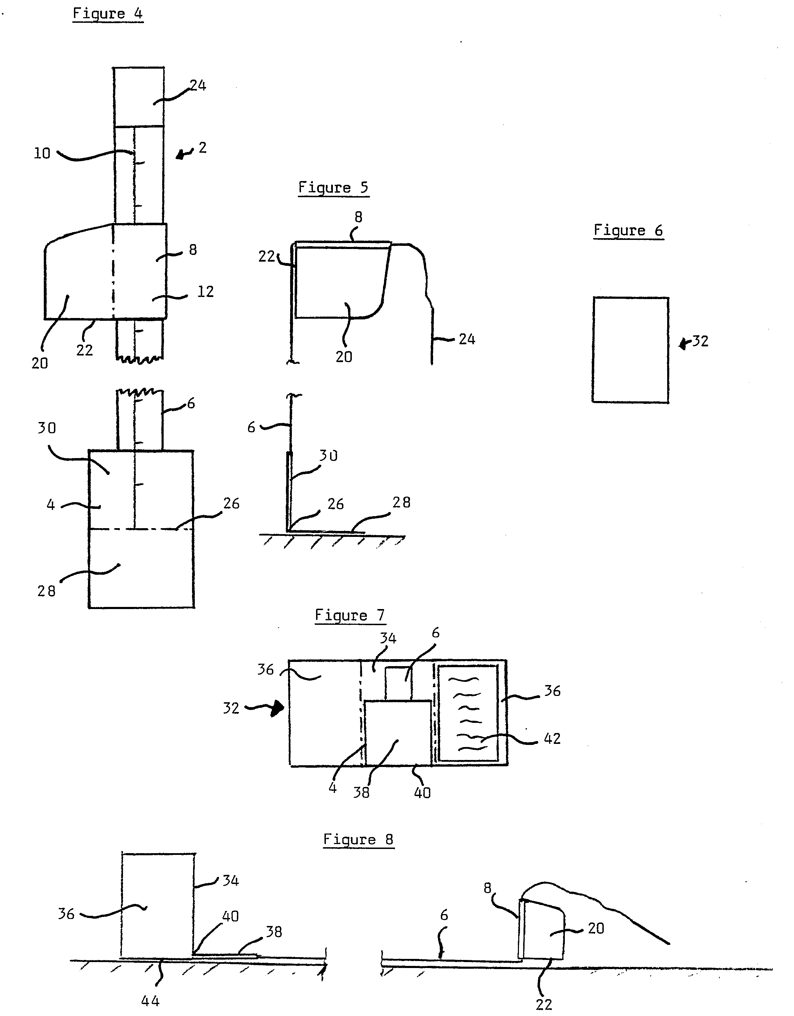

Figures 4 and 5 show a third embodiment of the present invention. This embodiment is similar to that of Figure 3 in that the sleeve 8 has a bracket 20 hingedly attached thereto. In use, that transverse edge 22 of the bracket 20 which is near to the base plate 4 is positioned against the vertically oriented measuring strip 6 so as to ensure that the sleeve 8 is horizontal. The end of the flexible strip 6 which is remote from the base plate 4 is provided with a rigid end piece 24 which aids the strip 6 being threaded through the sleeve 8. The base plate 4 has a transverse fold line 26 which divides the base plate 4 into a first portion 28 at the end of the measuring device 2 which, when the device is being used to measure a person's height, is disposed horizontally and beneath the feet of the person being measured, and a second portion 30 to which the flexible measuring strip 6 is hingedly attached and which is arranged, in use, to be vertically oriented. The origin of the measuring scale 10 of the device is at the fold line 26. This embodiment has an advantage in that the various components of the device can readily be folded up and disposed between the two folded-over portions of the base plate.

Figures 6 to 8 show a fourth embodiment of the present invention which is a baby height measure. In this embodiment, the measuring device is constructed in the form of a folder 32 which can enclose the remaining components of the device. Figure 6 shows the folder 32 when folded up. Figure 7 shows the folder 32 when partly opened. The folder 32 consists of a rectangular central portion 34 and two foldable rectangular wing portions 36 on either side of the central portion 34. The central portion 34 constitutes one part of the base plate 4 and a second part 38 of the base plate 4 is hingedly attached thereto via a transverse fold line 40. The measuring strip 6 is hingedly attached to the second part 38 of the base plate 4. The central portion 34 and the second part 38 correspond respectively to the first and second portions 28, 30 of the base plate 4 of the embodiment of Figures 4 and 5.

One of the wing portions 36 has attached to the inside face thereof a booklet 42. The booklet 42 may be printed with information relating to the use of the height measure, promotional material, nursery rhymes, childrens' growth data, etc. The flexible measuring strip 6 and the sleeve 8 are neatly disposed between the central portion 34 and the second part 38 of the base plate 4. It will be seen that the height measure can neatly be folded up and contains not only the measure itself but a booklet in combination therewith. If desired, the booklet 42 can be attached to the central portion 34 instead of to one of the wing portions 36, and in this embodiment the second part 38 is hingedly attached to one of the wing portions 36. In a further embodiment, one of the wing portions 36 can be omitted.

Referring to Figure 8, in use the baby height measure is disposed horizontally e.g. on a table. The folder 32 is opened up and the wing portions 36 are folded back away from the central portion 34 and the strip 6. The central portion 34 is vertical and the second part 38 of the base plate 4 is horizontal. The bottom transverse edges 44 of the wing portions lie adjacent the horizontal surface and are parallel with the measuring strip 6 and this ensures that the central portion 34 is maintained in a vertical position without it having to be held manually in that position. The sleeve 8 is provided with a bracket 20 which is hingedly attached thereto. The bracket 20 can be folded back away from the base plate 4 and the transverse edge 22 of the bracket 20 which is near to the base plate 4 is positioned adjacent the horizontal surface. This ensures that the sleeve 8 is maintained in a vertical position during the measuring operation and that accurate measurements can easily be made. Alternatively, the booklet 20 can be folded towards the base plate 4. If desired, two such brackets 20 may be provided, one on each side of the sleeve 8.

The present invention can provide a personal height measure which is particularly easy and convenient to use both by children and adults. The height measure can also be used horizontally for the measurement of the height of babies by parents, nurses, etc. The length of the measuring strip can be varied as desired. The scale is easy to read and permits immediate reading of the measured height and comparison with earlier readings. By making successive measurements and by marking the front face of the measuring strip as described above a permanent record of a child's height over a period of time can be recorded. If desired, both sides of the measuring strip can be provided with scales so that the measuring strip is "reversible". The provision of the slidable sleeve permits relatively accurate measurements of a person's height to be made. Typically, measurements are accurate to within 3 to 6 mm (1/8 to 1/4 inch), which is appreciably greater than that which can generally be achieved using the conventional wall height chart. Furthermore, the height measuring device is portable and self-contained and is very sturdy due to the provision of a non-tearable measuring strip. In addition to being used vertically, the height measuring device can also be used horizontally e.g for measuring young children.

In the preferred embodiment of the invention, the sleeve and base are provided with spaces for children to write their names, birth date, etc. The sleeve and base can be printed with areas for writing in children's shoe, sock and clothes sizes, plus age, height and weight scales.

## Claims

1. A length measuring device comprising a base plate, an elongate flexible measuring strip which is hingedly attached to an edge of the base plate and a sleeve which is slidably mounted on the measuring strip.

2. A length measuring device comprising a base plate, an elongate flexible measuring strip which is hingedly attached to an edge of the base plate so that the base plate can be disposed at an end of an article whose length is to be measured and at an angle with respect to the attached portion of the measuring strip, and a sleeve which is slidably mounted on the measuring strip, so that the sleeve can be slid along the measuring strip and disposed against another end of the article, the sleeve being employed to bend the flexible measuring strip so that the sleeve is disposed at an angle with respect to the adjacent portion of that part of the measuring strip which is between the base plate and the sleeve.

3. A length measuring device according to Claim 1 or Claim 2 wherein a face of the measuring strip has a printed scale extending longitundinally therealong, with the origin of the scale coinciding with the edge of the base plate.

4. A length measuring device according to any one of Claims 1 to 3 further comprising a bracket which is attached to the sleeve and has a free edge which is at right-angles to the sleeve, whereby when the sleeve is at right-angles to that portion of the measuring strip which is between the base plate and the sleeve the said free edge of the bracket is parallelly aligned with the said portion of the measuring strip.

5. A length measuring device according to Claim 4 wherein the bracket is in the form of a right-angled triangle having two edges which form the right angle, one of the said two edges being the said free edge and the other of the said two edges being attached to the sleeve.

6. A length measuring device according to Claim 2, wherein the base plate comprises a first portion which is at an end of the device and a second portion which is between the first portion and the measuring strip, the first and second portions being foldable together thereby to store the measuring strip and sleeve therebetween, the first portion of the base plate, in use, being disposed adjacent the end of the article whose length is to be measured.

7. A length measuring device according to

**0 265 291**

Claim 6, wherein the first portion of the base plate has hingedly attached thereto two opposed wing portions which can be folded over the first and second portions of the base plate thereby to form a folder for storing the strip and the sleeve.

8. A length measuring device according to Claim 7, wherein one of the wing portions has a booklet attached thereto.

9. A length measuring device according to Claim 6, wherein the first portion of the base plate has hingedly attached thereto a foldable cover which can be folded over the first and second portions of the base plate thereby to form a folder for storing the strip and the sleeve.

10. A length measuring device according to Claim 9, wherein the foldable cover has an additional foldable panel hingedly attached thereto.

11. A length measuring device according to Claim 9 or Claim 10, wherein one of the foldable cover and the additional foldable panel has a booklet attached thereto.

0265291

Figure 2

Figure 3

Figure 1

0265291

Figure 4

Figure 5

Figure 6

Figure 7

Figure 8